# EUROPEAN PATENT APPLICATION

(11) **EP 2 661 076 A2**
(43) Date of publication of application: **06.11.2013**
(21) Application number: 11854137.4
(22) Date of filing: 30.12.2011
(51) Int. Cl.: H04N 7/14, H04N 13/02

(54) **PORTABLE VIDEO COMMUNICATION DEVICE COMPRISING A CAMERA, AND METHOD THEREFOR**

(30) Priority: 31.12.2010 KR 20100140722; 14.01.2011 KR 20110004231; 30.12.2011 KR 20110147329
(71) Applicant: Electronics and Telecommunications Research Institute, Daejeon 305-700 (KR)
(72) Inventor: CHOI, Min Sheo, Daejeon 305-769 (KR)
(74) Representative: Betten & Resch
(86) International application number: PCT/KR2011/010401
(87) International publication number: WO 2012/091526

(57) **Abstract**

A video communication device includes a first camera and a second camera that are positioned at different positions to form a symmetrical relationship about a reference point at a periphery of a video display screen. The video communication device performs video communication based on images that are acquired from the first camera and the second camera, and performs a communication mode change according to a request for a communication mode change.

## Description

### [Technical Field]

The present invention relates to a video communication device. More particularly, the present invention relates to a portable video communication device having a camera, and a method of performing video communication using the same.

### [Background Art]

With an increase of available bandwidth of a mobile communication service and an increase in the spread of Wi-Fi, services for providing video communication in an individual portable device have gradually increased. However, a video communication service using a third generation (3G) network has low user satisfaction due to low image quality, and when the video communication service uses a Wi-Fi network, degradation of image quality is somewhat solved, but a problem of discrepancy between sight lines of a user still exists.

The problem of discrepancy between sight lines indicates a discrepancy between a sight line in which a user views a video communication terminal and a user's sight line that is displayed on a screen of a video communication terminal. This is because a camera of a video communication terminal photographing a user is positioned at an edge of the video communication terminal, but because a sight line of the user turns toward a screen center of the video communication terminal, the sight line of the user and the central axis of a camera lens do not correspond. This operates as an element that obstructs an on-the-spot feeling that users attempting video communication should necessarily feel.

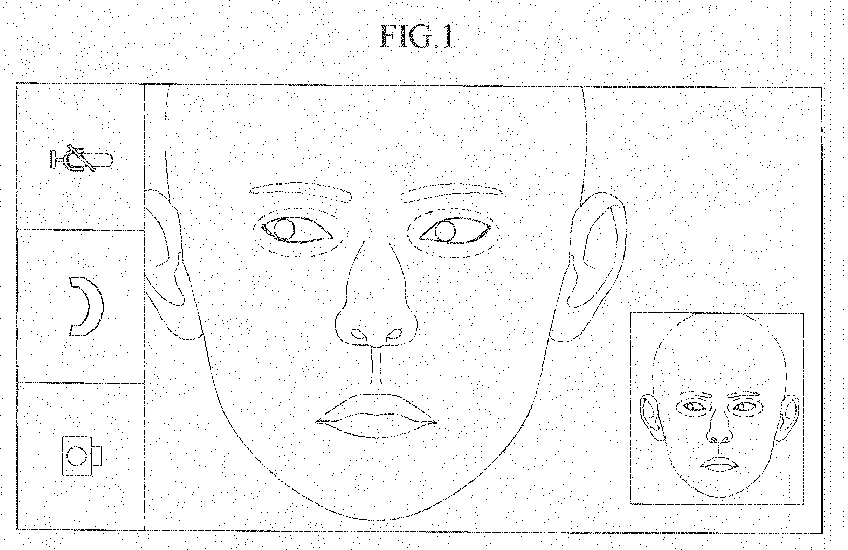

FIG. 1 is a diagram illustrating an example of a problem of discrepancy between sight lines occurring in a conventional video communication device.

Referring to FIG. 1, in an image that is displayed on a screen of a video communication device, it looks as if a sight line of a user performing communication turns toward the left side. However, the user generally views a screen center of the video communication device. That is, the user views another party that is displayed through the screen. However, because a camera that is positioned at the screen edge photographs the user at the right side of the device (i.e., a direction that is deviated from a sight line), it looks as if the user views the left side. Therefore, both parties performing video communication view the center of the screen, but there is a problem that a sight line of either one of both parties does not correspond with that of the other one.

Further, the conventional video communication device cannot perform a mode change between video communication and audio communication before starting an incoming call or while performing communication. Therefore, even if a poor communication environment and insufficient system resources are a problem, by continuing to maintain a presently set communication mode, the conventional video communication device insufficiently copes with a problem that communication quality is entirely deteriorated.

### [DISCLOSURE]

### [Technical Problem]

The present invention has been made in an effort to provide a video communication device and a method of performing communication using the same having advantages of providing a video communication service with an on-the-spot feeling by solving a problem of discrepancy between sight lines upon performing video communication.

The present invention has been made in an effort to further provide a multi-functional portable video communication device and a method of controlling the same having advantages of displaying one of a viewpoint synthesis image and a stereoscopic image upon performing video communication.

The present invention has been made in an effort to further provide a video communication device and a method of controlling the same having advantages of freely performing a mode change between video communication and audio communication or a change between various audio communication modes.

### [Technical Solution]

An exemplary embodiment of the present invention provides a video communication device, including: a communication processor that performs communication through a network; an image display unit; and a first camera and a second camera that are positioned at a periphery of the image display unit and that are each positioned at different positions to form a symmetrical relationship about a reference point.

The reference point may be positioned at the center of a screen of the image display unit.

The first camera and the second camera may each be formed at positions to form a vertical symmetrical relationship based on the reference point. The first camera and the second camera may each be formed at positions to form a bilateral symmetrical relationship based on the reference point.

The video communication device may further include an image processor that processes images that are photographed by the first camera and the second camera and that outputs the images to the image processor or the communication processor.

The video communication device may further include a communication mode change unit that changes a communication mode from a present communication mode to a target communication mode according to a change request.

The image processor may include: a first viewpoint image acquisition unit that receives and processes an image that is photographed by the first camera and that generates a first viewpoint image; a second viewpoint image acquisition unit that receives and processes an image that is photographed by the second camera and that generates a second viewpoint image; a stereo matching unit that outputs disparity values based on the first viewpoint image and the second viewpoint image; and an image synthesizing unit that generates a viewpoint synthesis image by synthesizing the first viewpoint image and the second viewpoint image based on the disparity values, or that generates a stereoscopic image by processing the first viewpoint image and the second viewpoint image, or that selects, processes, and outputs one of the first viewpoint image and the second viewpoint image.

The communication mode change unit may change a communication mode at a time point when communication starts or while performing communication.

Another embodiment of the present invention provides a method of performing communication in a video communication device that performs communication with another communication device through a network, the method including: determining whether a request for a communication mode change occurs; and changing, if a request for a communication mode change occurs, a communication mode from a present communication mode to a target communication mode according to the change request.

The changing of a communication mode may include changing the communication mode and notifying the other communication device of the changed communication mode.

The changing of a communication mode may further include comparing a level of the present communication mode and a level of the target communication mode, and changing a communication mode when the level of the target communication mode is lower than that of the present communication mode.

The changing of a communication mode may further include notifying the other communication device that a communication mode is scheduled to be changed when the level of the target communication mode is lower than that of the present communication mode, and the communication mode may be changed after the notification.

The changing of a communication mode may further include performing media negotiation with the other communication device when the level of the target communication mode is higher than that of the present communication mode, and changing the present communication mode to the target communication mode when the media negotiation has succeeded.

The communication mode change request may occur when a communication mode change is requested in consideration of at least one of a state of a communication channel and an available state of a present system resource.

The communication mode may include at least two of a first video communication mode that performs communication based on a viewpoint synthesis image, a second video communication mode that performs communication based on a stereoscopic image, a third video communication mode that performs communication based on a single image, and an audio communication mode. A first level may be provided to the audio communication mode, a second level may be provided to the third video communication mode, a third level may be provided to the first video communication mode, and a fourth level may be provided to the second video communication mode, and a condition of the first level<the second level<the third level<the fourth level may be satisfied.

The method may further include receiving permission on a communication mode change from another communication device before performing a change to the target communication mode, wherein a change to the target communication mode may be performed only when permission from the other communication device exists.

Yet another embodiment of the present invention provides a method of performing communication in a video communication device that performs communication with another communication device through a network, the method including: acquiring a first viewpoint image and a second viewpoint image from a first camera and a second camera, respectively, that are positioned at a periphery of a video display screen and that are positioned at different positions to form a symmetrical relationship about a reference point; generating a viewpoint synthesis image based on the first viewpoint image and the second viewpoint image when a present communication mode is a video communication mode based on a viewpoint synthesis image; and performing video communication based on the viewpoint synthesis image.

The method may further include: determining whether a change request to an audio communication mode occurs; and changing, if a change request to an audio communication mode occurs, a communication mode from a present video communication mode to an audio communication mode according to the change request.

### [Advantageous Effects]

According to an exemplary embodiment of the present invention, by providing a viewpoint synthesis image upon performing video communication, a problem of a discrepancy between sight lines of a user performing communication can be solved. Therefore, because other parties performing video communication can perform communication while corresponding the sight lines, a video communication service of an on-the-spot feeling can be provided. As a video communication screen size increases and as a distance from a central part of a screen to a camera increases (e.g., a tablet PC), an effect of solving a problem of discrepancy between sight lines by a viewpoint synthesis image can be more remarkable.

Further, a video communication device according to an exemplary embodiment of the present invention provides a stereoscopic image and thus a problem of a discrepancy between sight lines occurring upon performing video communication can be solved.

Further, by changing a communication mode according to a user request or when a change of a communication environment or a system resource occurs, a more convenient and improved video communication service/audio communication service can be provided to a user.

### [Description of the Drawings]

FIG. 1 is a diagram illustrating a problem of discrepancy between sight lines occurring in a conventional video communication device.
FIG. 2 is a block diagram illustrating a configuration of a video communication device according to an exemplary embodiment of the present invention.
FIGS. 3 to 5 are perspective views illustrating installation examples of a camera in a video communication device according to an exemplary embodiment of the present invention.
FIG. 6 is a diagram illustrating a video communication device that is installed in a tablet PC according to an exemplary embodiment of the present invention.
FIG. 7 is a block diagram illustrating a structure of an image processor of a video communication device according to an exemplary embodiment of the present invention.
FIG. 8 is a block diagram illustrating a structure when an image processor generates a stereoscopic image according to an exemplary embodiment of the present invention.
FIG. 9 is a flowchart illustrating a method of performing video communication according to a first exemplary embodiment of the present invention.
FIG. 10 is a flowchart illustrating a method of performing video communication according to a second exemplary embodiment of the present invention.
FIG. 11 is a flowchart illustrating a process of changing a communication mode in a method of performing video communication according to an exemplary embodiment of the present invention.
FIG. 12 is a diagram illustrating a level on a communication mode basis according to an exemplary embodiment of the present invention.

### [Mode for Invention]

In the following detailed description, only certain exemplary embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

In addition, in the entire specification, unless explicitly described to the contrary, the word "comprise" and variations such as "comprises" or "comprising" will be understood to imply the inclusion of stated elements but not the exclusion of any other elements.

Hereinafter, a video communication device and a method of controlling the same according to an exemplary embodiment of the present invention will be described with reference to the attached drawings.

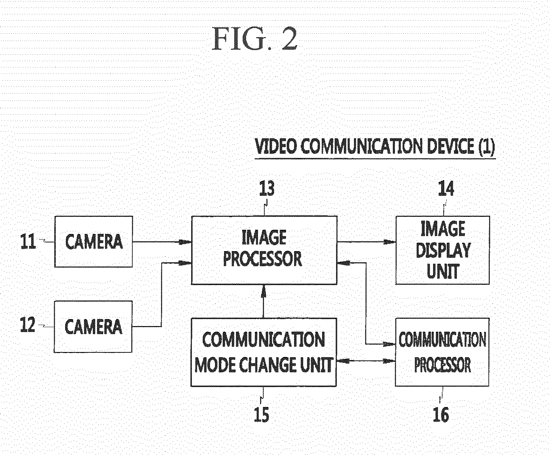

FIG. 2 is a block diagram illustrating a configuration of a video communication device according to an exemplary embodiment of the present invention.

As shown in FIG. 2, a video communication device 1 according to an exemplary embodiment of the present invention includes a plurality of cameras 11 and 12, an image processor 13 that processes images that are acquired from the plurality of cameras, and an image display unit 14 that displays the processed image, and may further include a communication mode change unit 15 and a communication processor 16 that performs communication according to a changed communication mode.

The plurality of cameras 11 each photograph and acquire images. The cameras 11 and 12 according to an exemplary embodiment of the present invention are formed at different positions, and they photograph and form a symmetrical relationship based on a reference point. The reference point is positioned on a video display screen in the image display unit 14.

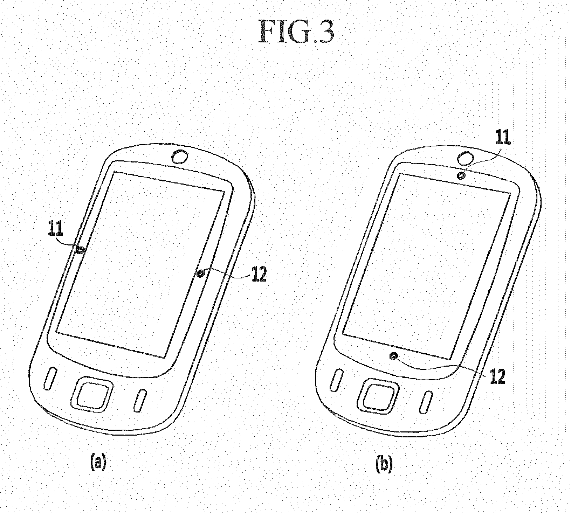

FIGS. 3 to 5 are perspective views illustrating installation examples of a camera in a video communication device according to an exemplary embodiment of the present invention.

The plurality of cameras 11 and 12 according to an exemplary embodiment of the present invention are positioned at a periphery of a video display screen by the image display unit 14, and specifically, are positioned at a circumferential area of a screen, and are formed at different positions to form a symmetrical relationship based on a reference point. For example, as shown in FIG. 3 (a), the cameras 11 and 12 may be positioned to form bilateral symmetry at a circumferential area of a screen. That is, on a screen that is formed with a first surface and a second surface of a lateral direction and a third surface and a fourth surface of a vertical direction, the camera 11 is positioned at the center of the third surface and the other camera 12 is positioned at the center of the fourth surface opposite to the third surface, and thus the cameras 11 and 12 form a bilateral symmetrical relationship.

Alternatively, as shown in FIG. 3 (b), the cameras 11 and 12 may be positioned to form vertical symmetry in a circumferential area of a screen. That is, one camera 11 is positioned at the center of the first surface of a screen and the other camera 12 is positioned at the center of the second surface opposite to the first surface, and thus the cameras 11 and 12 form a vertical symmetrical relationship. FIG. 3 (a) and (b) illustrate that two cameras form bilateral symmetry or vertical symmetry, but the position of the two cameras is not limited to bilateral symmetry or vertical symmetry.

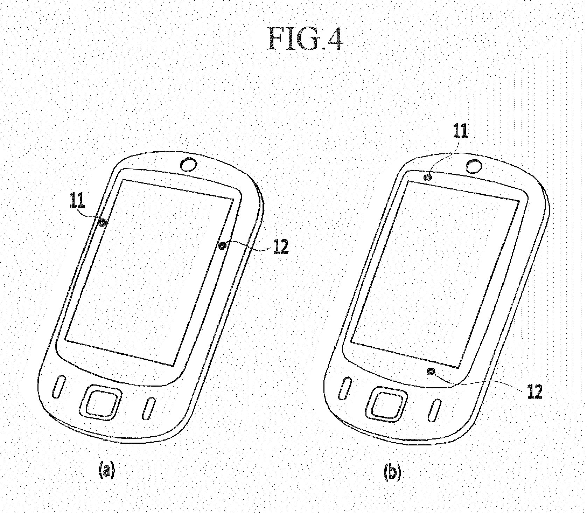

Further, a position of a reference point that forms a symmetrical relationship is not limited to the center of a screen. For example, as shown in FIG. 4 (a), two cameras 11 and 12 may be disposed to form line symmetry about a vertical axis that divides a screen into two.

As shown in FIG. 4 (b), one camera 11 is positioned at an upper end corner portion of the left side or the right side of a periphery of a screen, as in an existing single camera-based video communication terminal using only one camera, and the other camera 12 is positioned to form point symmetry to the camera 11 about a random point of an approximate screen central area.

In this way, when one camera 11 is formed at a position similar to that of an existing single camera-based video communication terminal and the other camera 12 is formed to form a symmetrical relationship with the camera 11 based on a random reference point, operation of one camera (e.g., 12) is stopped and video communication is performed using only a single camera (e.g., 11), according to a communication environment or a system circumstance. In this case, when a transmitting side video communication device transmits an image that is photographed only through one camera, a receiving side video communication device performs an operation that receives and displays only an image corresponding to one camera. Operation of only one of two cameras is not only applied to a video communication device of a form in which a camera is positioned at an upper end corner portion of the left side or the right side of a periphery of a screen, as in an existing video communication terminal, but is also applied to all cases in which a plurality of cameras are positioned to form a symmetrical relationship based on a reference point (or a reference line) according to an exemplary embodiment of the present invention.

As shown in FIG. 4 (b), when the camera 11 is disposed and another camera 12 is positioned to form point symmetry to the camera 11 about a random point of an approximate screen central area, an epipolar line does not correspond with a horizontal scan line of the image display unit 14 but forms an angle due to a position relationship of the two cameras and thus when images that are acquired by each camera are processed, an operation that is related to stereo matching may be somewhat complicated, and it may be very difficult to provide a stereoscopic image. That is, in this case, when newly synthesizing two viewpoint images, a stereoscopic image can be displayed and thus a separate image synthesis operation should be considered. Therefore, upon performing image processing, it is more advantageous to make an epipolar line of two cameras parallel to a horizontal scan line or a vertical scan line of the image display unit 14 than to perform an addition operation in consideration of the above-described situation. Particularly, in a stereoscopic image, because only a left image and a right image are considered, it is accurate to express that an epipolar line is always parallel to a horizontal line, but it is considered that a horizontal line and a vertical line may be replaced at any time due to a gyroscope function that is installed within a smart phone or a tablet PC.

Therefore, when positioning two cameras to form a symmetrical relationship to be appropriate for viewpoint synthesis or stereoscopic video communication to be described later instead of positioning two cameras to form a symmetrical relationship while enabling to perform a single camera-based video communication, a video communication device according to an exemplary embodiment of the present invention can be entirely more simply formed.

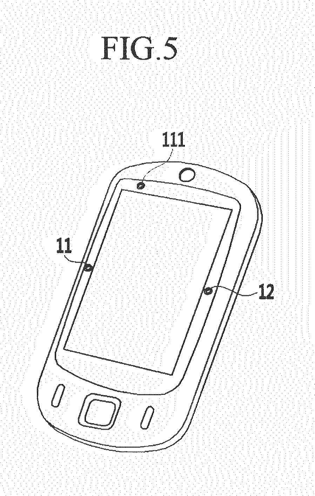

In some case, as shown in FIG. 5, in addition to two cameras 11 and 12 forming a symmetrical relationship based on a reference point, a camera 111 for single image-based communication is independently formed and thus a configuration that disposes a total of three cameras may be considered.

FIGS. 3 to 5 illustrate an example in which a video communication device according to an exemplary embodiment of the present invention is embodied in a form such as a smart phone, but the video communication device can be applied to various devices having a communication function.

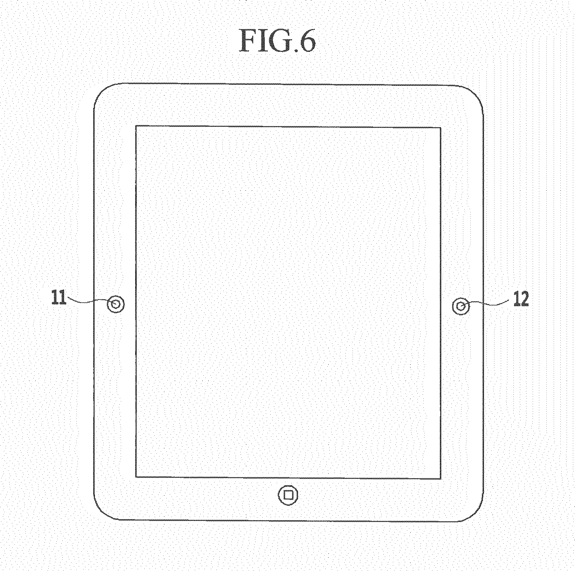

FIG. 6 is a diagram illustrating a video communication device that is installed in a tablet PC according to an exemplary embodiment of the present invention. Contents that have been previously described for a smart phone may be similarly applied, and the foregoing exemplary embodiments can be embodied by a person of ordinary skill in the art and thus a detailed description thereof will be omitted.

As shown in FIG. 6, two cameras 11 and 12 are formed to form a symmetrical relationship based on a reference point in a circumferential area of an image display screen of a tablet PC, images having different viewpoints are acquired and synthesized, and video communication is performed based on the synthesized image. Particularly, in a tablet PC, because a distance from the center of a screen that is displayed to a user for video communication to a camera position is much longer than that of a case of a smart phone and the screen size is relatively large, a viewpoint synthesis image according to an exemplary embodiment of the present invention can have a remarkable merit.

The cameras 11, 12, and 111 according to an exemplary embodiment of the present invention may be cameras of various forms such as a removable camera and a detachable camera in addition to a built-in fixed type camera. Further, the camera may be a built-in camera that is formed to rotate about a cylindrical axis. In this case, when performing video communication, a viewpoint of a peripheral scene as well as a communication person's face can be provided by a rotating camera. Here, the built-in camera may be rotated manually and/or by electrical power. In this way, when using various forms of cameras, i.e., a removable camera, a built-in camera, or a rotating camera, the corresponding cameras are formed to constantly maintain a fixed position and a relative angle of cameras while performing an image acquisition operation in spite of outside interference.

As described above, images that are photographed by the plurality of cameras 11 and 12 that are positioned to form various symmetrical relationships based on a reference point are input to the image processor 13 as shown in FIG. 2 and are processed.

The image processor 13 processes images that are photographed by the plurality of cameras 11 and 12, and outputs the images to the image display unit 14 or transmits the images through the communication processor 16.

Further, the image processor 13 generates a viewpoint synthesis image by synthesizing images that are photographed by the plurality of cameras 11 and 12, or generates a stereoscopic image format with each image, or selects and processes only one image and outputs the image to the image display unit 14. In addition, the image processor 13 provides an image that is generated by processing to the communication processor 16, and enables the communication processor 16 to transmit the image to another communication device (not shown) that performs communication.

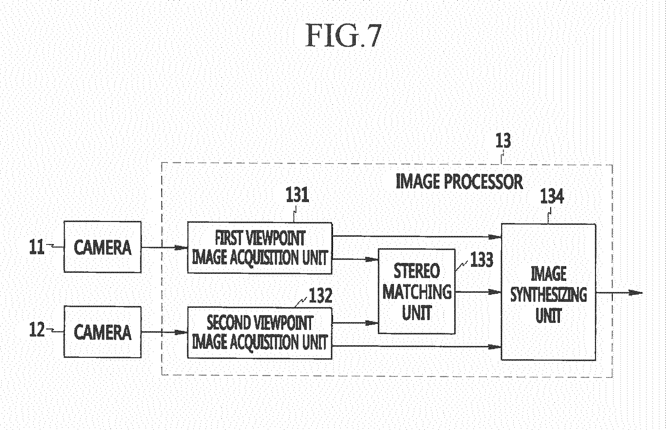

FIG. 7 is a block diagram illustrating a structure of an image processor according to an exemplary embodiment of the present invention.

As shown in FIG. 7, the image processor 13 according to an exemplary embodiment of the present invention includes a first viewpoint image acquisition unit 131, a second viewpoint image acquisition unit 132, a stereo matching unit 133, and an image synthesizing unit 134.

The first viewpoint image acquisition unit 131 receives and processes an image that is photographed by the camera 11 and generates a first viewpoint image, and the second viewpoint image acquisition unit 132 receives and processes an image that is photographed by the camera 12 and generates a second viewpoint image.

The stereo matching unit 133 compares the first viewpoint image and the second viewpoint image that are provided by the first viewpoint image acquisition unit 131 and the second viewpoint image acquisition unit 132, respectively, and provides a comparison result to the image synthesizing unit 134. For example, the stereo matching unit 133 calculates disparity between the first viewpoint image and the second viewpoint image, and provides the disparity value to the image synthesizing unit 134.

The image synthesizing unit 134 receives the first viewpoint image and the second viewpoint image from the first viewpoint image acquisition unit 131 and the second viewpoint image acquisition unit 132, receives the disparity value between the first viewpoint image and the second viewpoint image from the stereo matching unit 133, synthesizes the first viewpoint image and the second viewpoint image, and generates a viewpoint synthesis image. For example, the image synthesizing unit 134 determines the difference between viewpoints according to the disparity value between the first viewpoint image and the second viewpoint image, synthesizes the first viewpoint image and the second viewpoint image by applying the determined difference between viewpoints, and generates a synthesis image of a new viewpoint (i.e., an image of a front viewpoint). Such a synthesized image of a front viewpoint can solve a problem of discrepancy between sight lines. An exemplary embodiment of the present invention does not describe new view synthesis in detail. Many researches on new view synthesis have been performed, and many researches have been performed for improvement of performance of new view synthesis. A simple example thereof may be "Efficient Dense Stereo with Occlusion for New View-Synthesis by Four-State Dynamic Programming" (International Journal on Computer Vision, 2007) of Antonio Criminisi. In the present invention, any kind of new view synthesis technology may be applied, but a method in which a real-time processing is available and that can minimize a calculation amount is more useful.

Alternatively, the image synthesizing unit 134 processes the first viewpoint image and the second viewpoint image into a left image and a right image for a stereoscopic image, and thus generates a predetermined stereoscopic image format, and the predetermined stereoscopic image format is transferred again to the communication processor 16 and is transmitted to another terminal. In this case, operation of the stereo matching unit 133 is unnecessary, and the image synthesizing unit 134 includes a configuration of a common stereoscopic encoder.

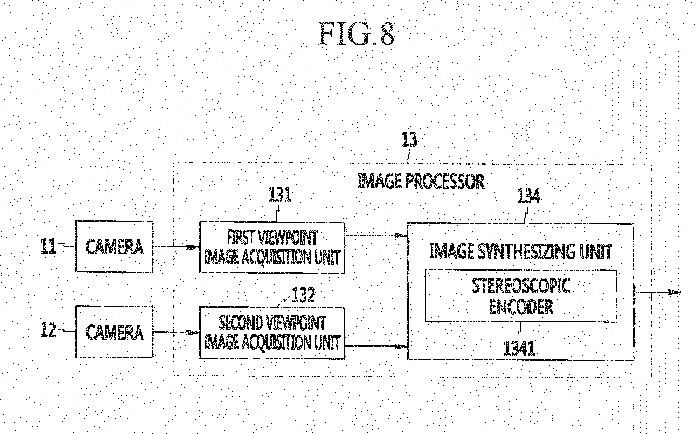

FIG. 8 is a block diagram illustrating a structure when an image processor generates a stereoscopic image. As shown in FIG. 8, the image synthesizing unit 134 includes a stereoscopic encoder 1341, and the stereoscopic encoder 1341 encodes an image that is output from the first viewpoint image acquisition unit 131 and an image that is output from the second viewpoint image acquisition unit 132 to a stereoscopic image format and outputs the stereoscopic image. A process of generating a stereoscopic image format based on two images that are photographed at different positions is well-known technology in the art and thus a detailed description thereof will be omitted. For example, MPEG-4 MVC standard technology may be used. In contrast, a stereoscopic image stream that is transmitted by another party is input to the image processor 13 via the communication processor 16, and is transferred to the image display unit 14 via a decoding process of a common stereoscopic image stream in the image processor 13. A specific configuration of the image processor 13 for performing such decoding is not shown, but a configuration of a common stereoscopic image decoder (e.g., MPEG-4 MVC) may be used. A stereoscopic image that is expressed through the image display unit 14 may be a stereoscopic image or an auto-stereoscopic image, and the stereoscopic image may be a polarizing stereoscopic image or a shutter glasses stereoscopic image. When the video communication device 1 according to an exemplary embodiment of the present invention is applied to a smart phone or a tablet PC, it is more convenient to generate an auto-stereoscopic image, but it is not always limited thereto.

In order to encode a stereoscopic image, the image synthesizing unit 134 may include, for example, an MPEG-4 AVC (MVC) codec. In addition, in order to reduce a calculation amount to be processed by the video communication device 1, the image synthesizing unit 134 may perform encoding at an intermediate point of a passing network or reduce a load that the video communication device 1 processes using distributed video coding technology.

Alternatively, the image synthesizing unit 134 may select and output one of the first viewpoint image and the second viewpoint image. In this case, the stereo matching unit 133 does not perform a special operation.

Particularly, the image synthesizing unit 134 according to an exemplary embodiment of the present invention outputs a stereoscopic image or a viewpoint synthesis image that synthesizes the first viewpoint image and the second viewpoint image or one image of the first viewpoint image and the second viewpoint image according to a communication mode according to an exemplary embodiment of the present invention to be described later.

It may be considered to include how many image processing functions within a mobile terminal to which the video communication device 1 according to an exemplary embodiment of the present invention are applied, and for example, a process of synthesizing images of two different viewpoints or a process of generating a stereoscopic image may be directly performed in a terminal that acquires two viewpoint images or may be performed at an intermediate point of a passing network that performs communication or in another terminal having an abundant calculation resource. Therefore, the image processor 14 according to an exemplary embodiment of the present invention may be embodied in a form that performs a function of generating a viewpoint synthesis image or a stereoscopic image or in a form that performs only a function of processing and transferring respective images that are provided from the first viewpoint image acquisition unit 131 and the second viewpoint image acquisition unit 132. However, in a presently generally used smart phone, because in addition to a CPU, a separate graphics processor is used, in some cases, as shown in FIG. 7, it may be fully considered that a mobile terminal mounts an image synthesis engine, i.e., an image processor that generates a viewpoint synthesis image or a stereoscopic image format. In this way, the image synthesis engine may be embodied anywhere in a transmission side terminal, a receiving side terminal, or a random node on a passing network according to a designer's intention.

The communication mode change unit 15 selects one of a plurality of communication modes. The communication processor 16 performs communication according to a communication mode that is selected by the communication mode change unit 15. Such a communication mode will be described in detail hereinafter.

The communication processor 16 enables audio communication or video communication to be performed by performing communication with another communication device (not shown), enables video communication to be performed by transmitting an image that is output from the image processor 13 to another communication device, and provides an image that is received from another communication device to the image processor 13 and enables the image processor 13 to process the image. In this case, the image processor 13 processes the received image and displays the received image in the image display unit 14. In this case, the received image may be a viewpoint synthesis image, a stereoscopic image (i.e., encoded stereoscopic image data stream), a plurality of images for a viewpoint synthesis image or a stereoscopic image (i.e., independent image data stream of each of a plurality of viewpoints), or a single image. In addition, audio communication may be performed.

Hereinafter, a method of performing video communication according to an exemplary embodiment of the present invention based on a video communication device having such a structure will be described. However, it becomes apparent to a person of ordinary skill in the art that a communication mode change method that is described hereinafter is not limited to only a video communication device having a configuration according to the present invention.

A video communication device according to an exemplary embodiment of the present invention operates in one communication mode of a plurality of communication modes. The plurality of communication modes include a first video communication mode that performs communication based on a viewpoint synthesis image that synthesizes images of different viewpoints, a second video communication mode that generates a stereoscopic image by processing images of different viewpoints and that performs communication based on the stereoscopic image, a third video communication mode that performs communication based on an image of one viewpoint, and an audio communication mode.

When performing video communication through a video communication device having two cameras, by introducing a graceful degradation or gradual degradation method, a communication mode may be adaptively changed according to a communication environment or a system environment, and a communication mode may be adaptively changed according to a user selection.

For example, when a good communication channel or sufficient system resources are available, the video communication device operates in the first video communication mode based on an image that is synthesized by a new viewpoint based on two viewpoint images. When a communication channel is not good or when sufficient system resources are unavailable, a video communication device operates in the second video communication mode that performs communication based on only an image of one viewpoint that is acquired by one camera. Further, in a communication environment where it is difficult to provide even one image, the video communication device operates in the audio communication mode. A graceful degradation system that is robust against an error may be embodied by a dynamic change of such a communication mode.

An adaptive change of such a communication mode may be performed according to a self determination operation of the video communication device, or may be performed by receiving an input of a mode change from a user. In this case, in a state in which the video communication device performs communication with another communication device, when a communication mode is changed by a self determination operation or a user input, by transmitting a signal notifying another communication device that a communication mode was changed, the video communication device enables both devices to adaptively change a communication mode while performing communication. Such a communication mode change may be performed at a time point at which an incoming call from another communication device is started as well as during a time period when communication is being performed. For example, when another communication device attempts communication in a video communication mode, even though a call of a video communication mode is received, a receiving side may start communication in an audio communication mode according to a self determination operation or a random selection of a user.

A video communication device according to an exemplary embodiment of the present invention determines a communication mode change based on, for example, a state of a communication channel, an available resource amount, or a user preference. A communication mode change may be performed between two modes belonging to a random combination including at least two of a first video communication mode that performs communication based on a viewpoint synthesis image, a second video communication mode that performs communication based on a stereoscopic image, a third video communication mode that performs communication based on an image that is acquired by a single camera, and an audio communication mode. For example, a change may be performed between two modes like a change from the first video communication mode to the third video communication mode or a change from the first video communication mode to the audio communication mode.

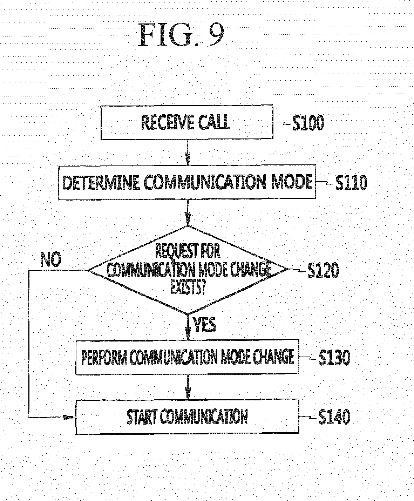

FIG. 9 is a flowchart illustrating a method of performing video communication according to a first exemplary embodiment of the present invention.

A first exemplary embodiment of the present invention illustrates a process of changing a communication mode before starting communication in an incoming call.

As shown in FIG. 9, when a call is received (S100), the video communication device 1 determines a communication mode of an incoming call (S110). The video communication device 1 determines whether a request for a communication mode change exists (S120). A communication mode change may be requested according to a user selection or by operation of determining a communication mode change of the communication mode change unit 15 of the video communication device 1.

If a request for a communication mode change exists, the video communication device 1 performs a communication mode change (S130). That is, the video communication device 1 performs a change from a mode of an incoming call to a communication mode according to a change request. For example, when a mode of the incoming call was a first video communication mode, and when a communication mode according to a change request is an audio communication mode, the video communication device 1 changes a communication mode from the first video communication mode to the audio communication mode.

The video communication device 1 starts communication with another communication device according to the changed communication mode (S140).

If a request for a communication mode change does not exist at step S120, the video communication device 1 starts communication according to a communication mode of an incoming call. For example, when a communication mode of an incoming call is a first video communication mode, the video communication device 1 starts communication according to the first video communication mode.

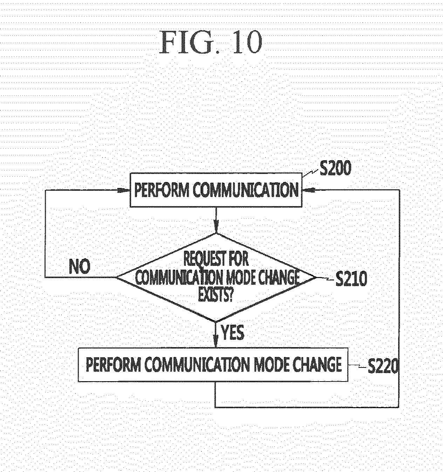

FIG. 10 is a flowchart illustrating a method of performing video communication according to a second exemplary embodiment of the present invention.

The second exemplary embodiment of the present invention illustrates a process of changing a communication mode while performing communication.

As shown in FIG. 10, the video communication device 1 performs communication according to a requested communication mode in an incoming call (S200), and the video communication device 1 determines whether a request for a communication mode change occurs (S210).I If a request for a communication mode change occurs, the video communication device 1 performs a change from a present communication mode to a communication mode according to the change request (S220).

Thereafter, the video communication device 1 continues to perform communication according to the changed communication mode.

Hereinafter, a process of changing a communication mode will be described in detail.

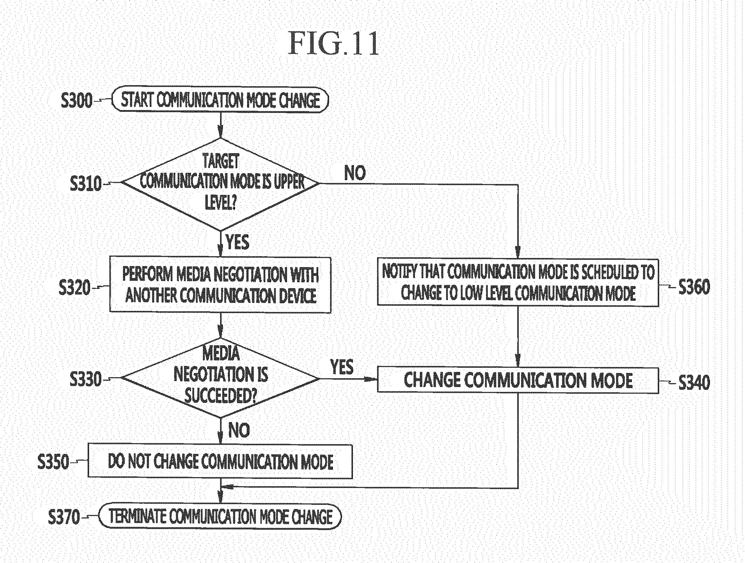

FIG. 11 is a flowchart illustrating a process of changing a communication mode in a method of performing video communication according to an exemplary embodiment of the present invention.

In the above-described first and second exemplary embodiments, when a procedure of changing a communication mode is started (S300), the video communication device 1 determines whether a communication mode to change to is a higher level than that of a present communication mode (S310), as shown in FIG. 11. Here, for convenience of description, a communication mode to change to is referred to as a "target communication mode".

In an exemplary embodiment of the present invention, a plurality of communication modes may have different levels.

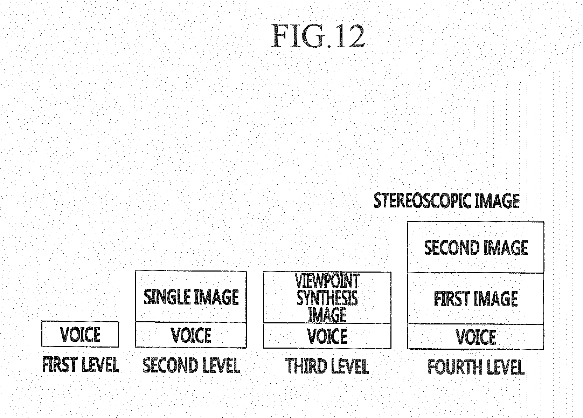

FIG. 12 is a diagram illustrating a level on a communication mode basis according to an exemplary embodiment of the present invention.

In an exemplary embodiment of the present invention, a level is given according to a bandwidth and a system resource that are requested on a communication mode basis, and levels according to an exemplary embodiment of the present invention are classified into a first level, a second level, a third level, and a fourth level, as shown in FIG. 12. When the first level<the second level<the third level<the fourth level, as a level increases, a bandwidth and a system resource that are requested when performing communication increase. Here, a meaning in which a requested system resource is large or small may be understood from the following paragraph. That is, because the first level processes only audio communication, the first level has the smallest requested calculation amount of the four levels. In the second level that should process an image as well as a voice, the calculation amount increases. Further, for this purpose, the second level should satisfy a condition in which at least one camera should be provided. Furthermore, in the third level that should synthesize a new viewpoint image from two viewpoint images, a requested calculation amount further increases, and in order to acquire two viewpoint images, at least two cameras are requested. In the fourth level, a calculation amount itself may be smaller than that of the third level, but a terminal for displaying a stereoscopic image should have a special configuration for displaying the stereoscopic image and thus a requirement of a system resource is higher. In short, in order to provide a service of a corresponding level, an expression of a system resource may include a requested calculation amount and a physical specification.

In addition, in an exemplary embodiment of the present invention, it is assumed that the third level requires a system resource smaller than that of the fourth level, but when a calculation amount that is requested for a viewpoint synthesis image is overwhelmingly large (when an algorithm of such characteristics is applied), the order of the third level and the fourth level may be changed. In short, to view a service of any form in an upper level is not determined according to an absolute reference.

In an exemplary embodiment of the present invention, the third level is provided to the first video communication mode that performs communication based on a viewpoint synthesis image, the fourth level is provided to the second video communication mode that performs communication based on a stereoscopic image, the second level is provided to the third video communication mode that performs communication based on a single image, and the first level is provided to the audio communication mode. Here, in the third video communication mode that performs communication based on an image that is acquired by a single camera and the second video communication mode that performs communication based on a synthesis image of different viewpoints, bandwidths that are occupied by a communication channel may be similar, but in the second video communication mode, the video communication device performs processing that synthesize two images having different viewpoints and thus a requested system resource amount (i.e., a calculation resource amount of the system) is larger. Accordingly, here, a higher level is provided to the second video communication mode than to the third video communication mode. However, the present invention is not limited thereto, and various changes can be performed. For example, in FIG. 12, the first level may be further subdivided, and when audio communication using only a narrowband codec and audio communication using a narrowband codec and a wideband codec exists, a higher level may be provided to audio communication using a wideband codec.

The video communication device 1 determines whether a target communication mode to change to is a higher level than a level of a present communication mode (S310), and if a target communication mode to change to is a higher level than a level of a present communication mode, the video communication device 1 performs media negotiation with another communication device (S320). In view of a characteristic of a device that performs communication, communication (e.g., the third video communication) of a low level may be performed, but communication of an upper level (e.g., the second video communication) may not be performed. Therefore, when changing to a target change mode, which is a higher level than a level of a present communication mode, it is negotiated whether a change to a target change mode of a higher level is available through media negotiation with another communication device that performs communication. The video communication device 1 determines whether media negotiation has succeeded (S330), and if media negotiation has succeeded, the video communication device 1 changes a present communication mode to the target communication mode (S340). Here, the media negotiation step may further include a step of receiving clear permission for a communication mode change from a user of another party's terminal.

If media negotiation has not succeeded, the video communication device 1 does not change a communication mode (S350). In this case, when a communication mode change is started according to a user request, the video communication device 1 notifies a user that a communication mode change has failed through the image display unit 14 or notifies a user that a communication mode change has failed through a separate notification means.

If a target communication mode to change to is a lower level than a level of a present communication mode at step S310, the video communication device 1 notifies another communication device that a communication mode is scheduled to change to a target communication mode (S360). The video communication device 1 changes a present communication mode to a target change mode (S340).

The above-described communication mode change process may be variously changed. For example, step S310 of comparing levels of a target change mode and a present communication mode may not be performed. That is, the video communication device 1 may perform media negotiation with another communication device according to a request for a communication mode change that has occurred regardless of a level of a target change mode and perform a communication mode according to a result thereof.

Further, the media negotiation step S320 may not be performed. When both devices that perform communication, i.e., when the video communication device 1 and another communication device already have information about a communication mode that can change using information that can be previously obtained, it is unnecessary to negotiate whether a change to a target change mode is available through media negotiation step. Therefore, when a target change mode is a lower level than a level of a present communication mode, clear media negotiation may be omitted. Further, in some cases, the media negotiation step may be replaced with a step of receiving clear permission for a communication mode change from a user of another party's terminal.

Methods according to an exemplary embodiment of the present invention are embodied in a program command form that can be performed through various computer means, and may be recorded in a computer readable medium. The computer readable medium may include a program command, a data file, and a data structure, individually or in combination. A program command that is recorded in the medium may be specially designed or formed for the present invention, or may be well-known to and used by a person of ordinary skill in the computer software art.

While this invention has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. A video communication device, comprising:
a communication processor that performs communication through a network;
an image display unit; and
a first camera and second camera that are positioned at a periphery of the image display unit and that are each positioned at different positions to form a symmetrical relationship about a reference point.

2. The video communication device of claim 1, wherein the reference point is positioned at the center of a screen of the image display unit.

3. The video communication device of claim 1, wherein the first camera and the second camera are each formed at positions to form a vertical symmetrical relationship based on the reference point.

4. The video communication device of claim 1, wherein the first camera and the second camera are each formed at positions to form a bilateral symmetrical relationship based on the reference point.

5. The video communication device of claim 1, further comprising an image processor that processes images that are photographed by the first camera and the second camera and that outputs the images to the image processor or the communication processor.

6. The video communication device of claim 5, further comprising a communication mode change unit that changes a communication mode from a present communication mode to a target communication mode according to a change request,
wherein the communication mode comprises at least two of a first video communication mode that performs communication based on a viewpoint synthesis image, a second video communication mode that performs communication based on a stereoscopic image, a third video communication mode that performs communication based on a single image, and an audio communication mode.

7. The video communication device of claim 6, wherein the image processor comprises:
a first viewpoint image acquisition unit that receives and processes an image that is photographed by the first camera and that generates a first viewpoint image;
a second viewpoint image acquisition unit that receives and processes an image that is photographed by the second camera and that generates a second viewpoint image;
a stereo matching unit that outputs disparity values based on the first viewpoint image and the second viewpoint image; and
an image synthesizing unit that generates a viewpoint synthesis image by synthesizing the first viewpoint image and the second viewpoint image based on the disparity values, or that generates a stereoscopic image by processing the first viewpoint image and the second viewpoint image, or that selects, processes, and outputs one of the first viewpoint image and the second viewpoint image.

8. The video communication device of claim 7, wherein the image processor generates the viewpoint synthesis image and outputs the viewpoint synthesis image to the communication processor in the first video communication mode,
the image processor generates the stereoscopic image and outputs the stereoscopic image to the communication processor in the second video communication mode,
the image processor outputs one of the first viewpoint image and the second viewpoint image to the communication processor in the third video communication mode, and
the communication processor does not output an image in the video communication mode.

9. The video communication device of claim 6, wherein the communication mode change unit changes a communication mode at a time point when communication starts or while performing communication.

10. A method of performing communication in a video communication device that performs communication with another communication device through a network, the method comprising:
determining whether a request for a communication mode change occurs; and
changing, if a request for a communication mode change occurs, a communication mode from a present communication mode to a target communication mode according to the change request.

11. The method of claim 10, wherein the changing of a communication mode comprises changing the communication mode and notifying the other communication device of the changed communication mode.

12. The method of claim 10, wherein the changing of a communication mode further comprises:
comparing a level of the present communication mode and a level of the target communication mode; and
changing a communication mode when the level of the target communication mode is lower than that of the present communication mode.

13. The method of claim 12, wherein the changing of a communication mode further comprises notifying the other communication device that a communication mode is scheduled to be changed when the level of the target communication mode is lower than that of the present communication mode, and
the communication mode is changed after the notification.

14. The method of claim 12, wherein the changing of a communication mode further comprises:
performing media negotiation with the other communication device when the level of the target communication mode is higher than that of the present communication mode; and
changing the present communication mode to the target communication mode when the media negotiation has succeeded.

15. The method of claim 10, wherein the communication mode change request occurs when a communication mode change is requested in consideration of at least one of a state of a communication channel and an available state of a present system resource.

16. The method of claim 10, wherein the communication mode comprises at least two of a first video communication mode that performs communication based on a viewpoint synthesis image, a second video communication mode that performs communication based on a stereoscopic image, a third video communication mode that performs communication based on a single image, and an audio communication mode,
a first level is provided to the audio communication mode, a second level is provided to the third video communication mode, a third level is provided to the first video communication mode, and a fourth level is provided to the second video communication mode, and
a condition of the first level<the second level<the third level<the fourth level is satisfied.

17. The method of claim 10, further comprising receiving permission on a communication mode change from another communication device before performing a change to the target communication mode,
wherein a change to the target communication mode is performed only when permission from the other communication device exists.

18. A method of performing communication in a video communication device that performs communication with another communication device through a network, the method comprising:
acquiring a first viewpoint image and a second viewpoint image from a first camera and a second camera, respectively, that are positioned at a periphery of a video display screen and that are positioned at different positions to form a symmetrical relationship about a reference point;
generating a viewpoint synthesis image based on the first viewpoint image and the second viewpoint image when a present communication mode is a video communication mode based on a viewpoint synthesis image; and
performing video communication based on the viewpoint synthesis image.

19. The method of claim 18, further comprising:
determining whether a change request to an audio communication mode occurs; and
changing, if a change request to an audio communication mode occurs, a communication mode from a present video communication mode to an audio communication mode according to the change request.

20. The method of claim 19, further comprising notifying the other communication device of the changed communication mode.
